# EUROPEAN PATENT APPLICATION

(11) **EP 1 821 226 A1**
(43) Date of publication of application: **22.08.2007**
(21) Application number: 07102583.7
(22) Date of filing: 16.02.2007
(51) Int. Cl.: G06F 17/30

(54) **Apparatus and method for displaying objects according to object request order**

(30) Priority: 21.02.2006 KR 20060016836
(71) Applicant: Samsung Electronics Co., Ltd., Suwon-si 442-742 Gyeonggi-Do (KR)
(72) Inventor: Sung, Youl-woong, Dongdaemun-gu Seoul (KR); Lee, Hwa-kyung, Gangnam-gu Seoul (KR)
(74) Representative: Clark, David James

(57) **Abstract**

Provided are an apparatus and method for displaying objects according to an object request, which can reduce the time required to display the objects by requesting the objects according to a display order of the objects. The apparatus includes a data reception unit (110) that receives data having object information regarding a plurality of objects stored in an external device; an object arrangement unit (140) that confirms the display order of the plurality of objects according to the object information and that generates an object request list, in which the objects are arranged in a specified order, according to a result of the confirmation; an object request unit (150) that transmits the object request list to the external device; and a display unit (170) that displays the objects transmitted from the external device in response to the transmitted object request list.

## Description

Apparatuses and methods consistent with the present invention relate to displaying objects according to a request order.

Generally, objects (e.g., images, moving images, and so forth) included in data that is received through a network, such as the Internet, are displayed so that object information, which includes object names and storage paths of objects, is extracted from the received data, and objects intended to be displayed are requested in the order of their arrangement in the extracted object information.

This object information is generally composed of a document prepared through a markup language, and specified objects are requested in the order of their arrangement in the object information composed of the markup language.

For example, if a user accesses a specified Internet site through a client, such as a PDA, the client receives data about the accessed site. The client extracts object information of the specified web page from the received data and requests objects that the client intends to display to a server according to the extracted object information.

The request order of the objects requested to the server follows the arrangement order of the objects in the object information. For example, if the web page of the Internet site accessed by the client includes a plurality of images, the data received by the client generally includes the objects of the images included in the corresponding web page.

In this case, the client requests the objects of the images included in the corresponding web page to the server in the order of their arrangement in the object information, and displays the received objects accordingly. For example, in the event that the web page of the Internet site accessed by the client includes image 1, image 2, and image 3, and the objects in the object information are arranged in the order of image 3, image 2, and image 1, the client requests the objects to the server in the order of image 3, image 2, and image 1.

On the other hand, the display order of the objects may or may not follow the order of their arrangement in the object information. For example, although the objects in the object information are arranged in the order of image 1, image 2, and image 3, the objects may be displayed in the order of image 2, image 1, and image 3.

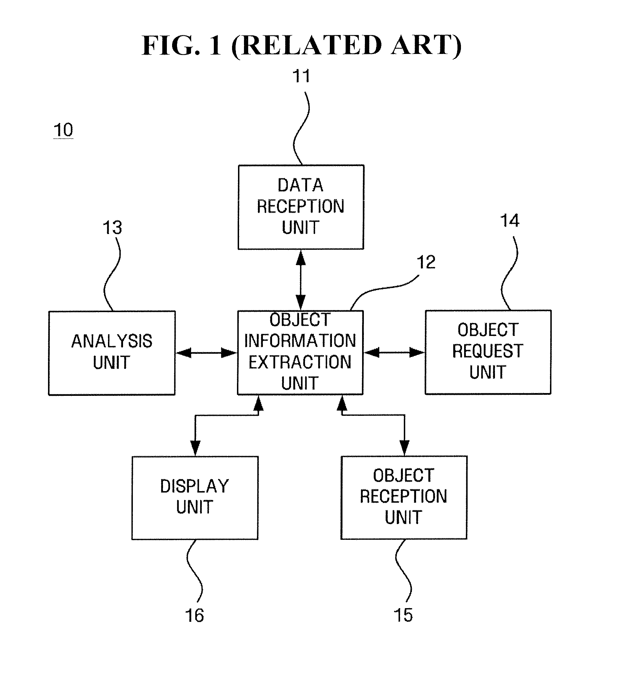

FIG. 1 is a block diagram illustrating the construction of a related art object display device.

As illustrated in FIG. 1, the related art object display device 10 includes a data reception unit 11 that receives data including object information, an object extraction unit 12 that extracts the object information from the received data, an analysis unit 13 that analyzes the extracted object information, an object request unit 14 that requests objects according to the result of analysis, an object reception unit 15 that receives the objects, and a display unit 16 that displays the received objects.

The object display device 10 of FIG. 1 may be understood as a client that accesses an Internet server, and the data may be transmitted from the Internet server in the event that the client has accessed the Internet server. In addition, the objects may be understood as images, moving images, and so forth, included in a specified web page of the Internet server.

The analysis unit 13 analyzes the object information extracted by the object extraction unit 12 in a displayable form, and the analyzed object information includes object names, storage paths, and position information of a plurality of objects.

The object request unit 14 generates an object request list in the arrangement order of the objects in the analyzed object information, and transmits the generated object request list to the Internet server. At this time, the Internet server transmits the objects to the object display device 10 according to the transmitted object request list.

The object reception unit 15 receives the objects transmitted from the Internet server, and the display unit 16 displays the received objects.

In this case, the related art object display device 10 requests the objects according to the arrangement order of the objects in the analyzed object information, irrespective of the display order of the objects, e.g., the display order of the objects when the specified web page is displayed.

Accordingly, in the event that the objects in the object information are arranged in the order of image 1, image 2, and image 3, the object display device 10 requests the objects according to the arrangement order of the objects.

However, if the display order of the objects is different from the arrangement order of the objects in the object information, for example, if the display of the objects is in the order of image 2, image 1, and image 3, and the arrangement of the objects is in the order of image 1, image 2, and image 3, the object display device 10 starts to display the objects when image 2 is received, irrespective of whether image 1 has been received.

Accordingly, the display of the objects starts only when image 2, which is next in the order with respect to image 1, is received, and this causes the processing time required for displaying the objects to be increased.

On the other hand, if the request order of the objects is different from the display order of the objects and the client has a low processing capability, or the number of channels and a data receiving speed are limited, the processing time required for displaying the objects is still further increased.

Japanese Patent Unexamined Publication No. 2005-301380 discloses a web server that stores all images constituting a four-scene cartoon in an integrated image file, stores the address of the image file in a document file of a markup language format, and transmits the image file and the document file in response to an outside request. However, this prior art prevents the next scene in the four-scene cartoon from being displayed before the preceding scene.

Exemplary embodiments of the present invention aim to address the above disadvantages and other disadvantages not described above.

According to an aspect of the present invention, there is provided an apparatus for displaying objects according to an object request order, the apparatus including a data reception unit that receives data including object information regarding a plurality of objects stored in an external device, an object arrangement unit that confirms a display order of the plurality of the objects according to the object information and that generates an object request list, in which the objects are arranged in a specified order, according to a result of the confirmation, an object request unit that transmits the object request list to the external device, and a display unit that displays the objects transmitted from the external device in response to the transmitted object request list.

According to another aspect of the present invention, there is provided a method of displaying objects according to an object request order, the method including receiving data having object information regarding a plurality of objects stored in an external device, confirming a display order of the plurality of objects according to the object information and generating an object request list, in which the objects are arranged in a specified order, according to a result of the confirmation, transmitting the object request list to the external device, and displaying the objects transmitted from the external device in response to the transmitted object request list.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram illustrating the construction of a related art object display device;
FIG. 2 is a block diagram illustrating the construction of an apparatus for displaying objects according to an object request order according to an exemplary embodiment of the present invention;
FIG. 3 is an exemplary view illustrating object information for use with an exemplary embodiment of the present invention;
FIG. 4 is an exemplary view illustrating an object request list generated according to the arrangement order of objects in object information according to an exemplary embodiment of the present invention;
FIG. 5 is an exemplary view illustrating an object request list obtained by updating the object request list of FIG. 4 according to the display order of objects according to an exemplary embodiment of the present invention;
FIG. 6 is an exemplary view illustrating an object request list obtained by updating the object request list of FIG. 4 according to the number of channels and a data receiving speed according to an exemplary embodiment of the present invention;
FIG. 7 is a flowchart illustrating a method of displaying objects according to an object request order according to an exemplary embodiment of the present invention; and
FIG. 8 is an exemplary view illustrating objects being displayed according to an exemplary embodiment of the present invention.

The exemplary embodiments of the present invention will be described herein with reference to the accompanying drawings illustrating block diagrams and flowcharts for explaining an apparatus and method for displaying objects according to an object request order according to exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

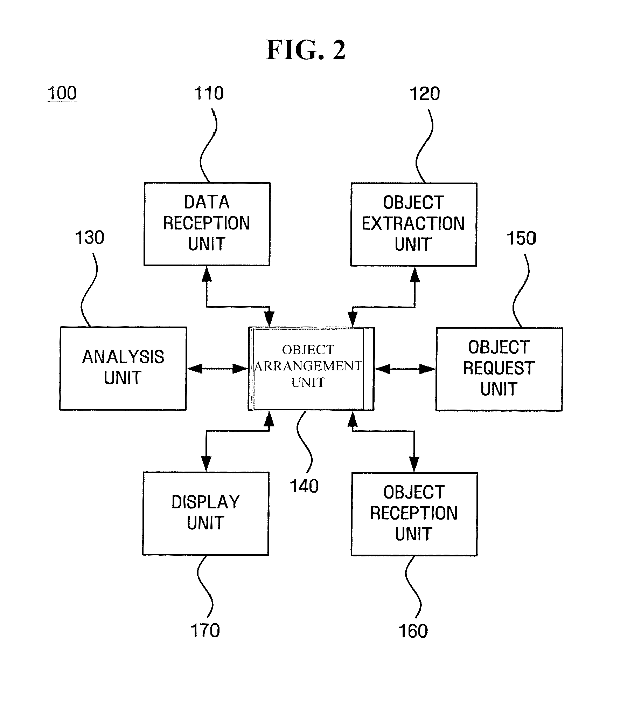

FIG. 2 is a block diagram illustrating the construction of an apparatus for displaying objects according to an object request order according to an exemplary embodiment of the present invention. The apparatus for displaying objects according to an object request order according to an exemplary embodiment of the present invention may be understood as an apparatus that accesses an external device (e.g., server) that stores objects, such as images and moving images, through a network, such as the Internet, and requests the objects stored in the server when displaying the objects.

As illustrated in FIG. 2, the object display apparatus 100 according to an exemplary embodiment of the present invention includes a data reception unit 110, an object extraction unit 120, an analysis unit 130, an object arrangement unit 140, an object request unit 150, an object reception unit 160, and a display unit 170.

The data reception unit 110 receives data including object information, such as object names, storage paths, and display position information of objects, from an external device connected through a network.

In the exemplary embodiment of the present invention, the object information is exemplified as being composed of a markup language, e.g., an HTML (Hyper Text Markup Language) and an XML (eXtensible Markup Language). Also, in the exemplary embodiment of the present invention, the object information is exemplified as including the object names and storage paths of the objects. However, the object information is not limited thereto, but may further include display effects (e.g., font and style) of the objects.

Also, in the exemplary embodiment of the present invention, the objects are exemplified as being content, such as images and moving images, and the object display apparatus according to an object request order is an apparatus that displays data received from an external device through a network such as the Internet. However, the object display apparatus is not limited thereto, but may include an apparatus for outputting the objects in the form that the user can recognize, such as an apparatus for printing the objects received from the external device.

The object extraction unit 120 extracts the object information included in the data received through the data reception unit 110, and the analysis unit 130 analyzes the extracted object information in a displayable form.

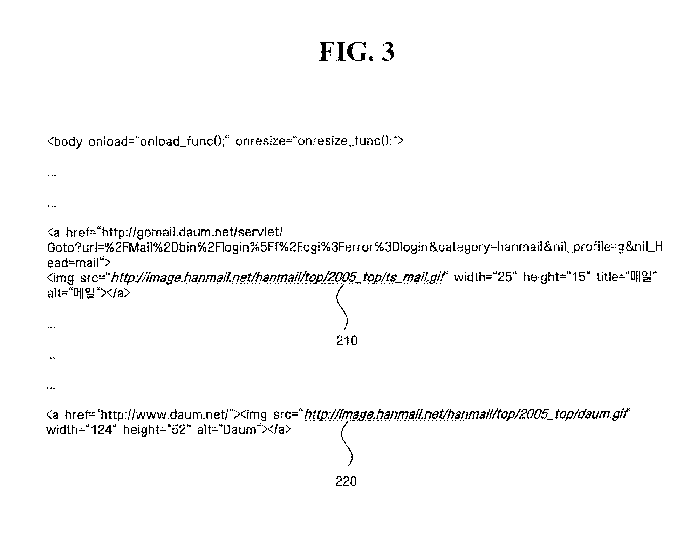

For example, as shown in FIG. 3, the analysis unit 130 processes the object information in a displayable form by analyzing the object information included in the received data. In the exemplary embodiment of the present invention, the object information of FIG. 3 includes object 1 210 and object 2 220. Also, in the exemplary embodiment of the present invention, the display of object 2 220 is exemplified as preceding the display of object 1 210.

In the exemplary embodiment of the present invention, the object display apparatus 100 according to the object request order requests objects 210 and 220 included in the object information of FIG. 3 to the external device through the object request unit 150 to be explained later. In the exemplary embodiment of the present invention, the objects are exemplified as being received from the external device. However, all the objects need not be transmitted from the external device, but a part of the objects may be included in the data received through the data reception unit 110.

The object arrangement unit 140 generates an object request list in which the objects included in the object information analyzed by the analysis unit 130 are arranged in a specified order. Basically, the arrangement order of the objects in the object request list follows the arrangement order of the objects in the object information, and in the exemplary embodiment of the present invention, the object arrangement unit 140 updates the arrangement order of the objects in the object request list according to the display order of the objects, the number of network channels and the data receiving speed.

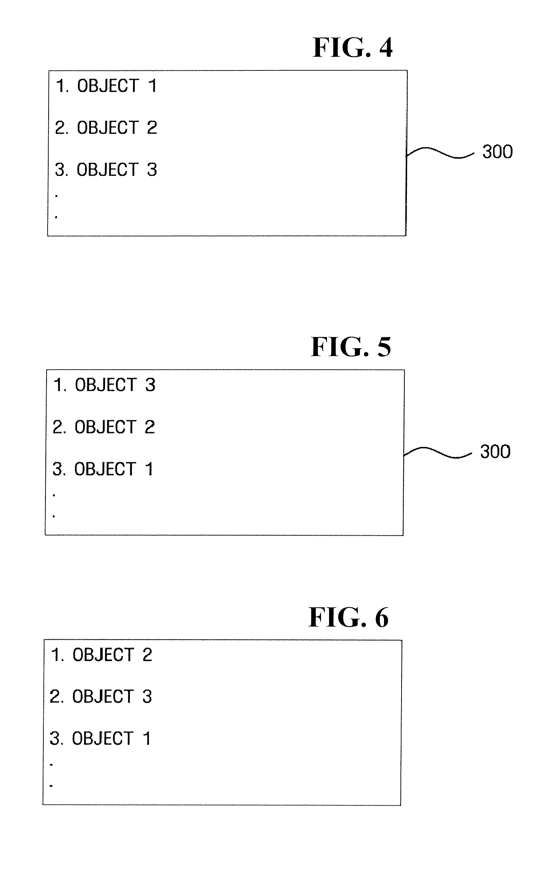

For example, as shown in FIG. 4, the object request list 300 generated by the object arrangement unit 140 according to the arrangement order of the objects in the object information the channel number, is basically in the order of object 1, object 2, and object 3, that is, the arrangement order of the objects in the object information of FIG. 3 as described above. In the exemplary embodiment of the present invention, object 3 of FIG. 4, which is not illustrated in FIG. 3, is positioned next to object 2 in the object information, but its display order is far in advance of others.

In the case in which the objects are displayed in the order of object 3, object 2, and object 1, the object arrangement unit 140 updates the order of the objects in the object request list to the order of object 3, object 2, and object 1, as shown in FIG. 5.

For example, if object 1 and object 2 are first requested in a state that object 3 is displayed first of all on a specified web page, the specified web page starts to be displayed only when object 3 is received after object 1 and object 2 are received. This causes a time delay, as long as the time required for receiving object 1, object 2, and object 3, to occur in displaying the web page. By updating the order of the objects in the object request list according to the display order of the objects, the time required for displaying the specified web page can be reduced.

In this case, the object arrangement unit 140 can update the object request list according to position information of the objects included in the object information as described above. On other words, the display of the specified web page starts from the upper side of the display screen. At this time, the object arrangement unit 140 can confirm the first displayed object through the position information of the objects.

In the exemplary embodiment of the present invention, the display order of the objects is exemplified as having the highest priority in arranging the objects in the object request list. However, this is merely exemplary, and any other condition may have a higher priority than the display order as needed.

On the other hand, the object arrangement unit 140, after it arranges the objects in the object request list according to the display order of the objects, may rearrange the objects according to the number of networks and the data receiving speed.

In other words, if two objects arranged in succession have a first size and a second size, respectively, and the first size is larger than the second size, the object arrangement unit 140 may rearrange the objects so that the object having the second size precedes the object having the first size.

For example, after the arrangement order of the objects in the object request list 300 is updated according to the display order of the objects, i.e., in the order of object 3, object 2, and object 1, as shown in FIG. 5, the object arrangement unit 140 may re-update the display order of the neighboring objects according to the number of channels, the data receiving speed, and so forth. In other words, if the size of object 3 is larger than that of object 2, and object 3 is positioned adjacent to object 2, as shown in FIG. 5, the object arrangement unit 140 may first request object 2, instead of object 3, according to the number of channels and the data receiving speed and may re-update the object request list 300 as shown in FIG. 6.

The object request unit 150 transmits the object request list in which the objects are finally arranged by the object arrangement unit 140 to the external device. In this case, the external device transmits the objects to the object display device 100 according to the arrangement order of the object request list transmitted from the object request unit 150.

The object reception unit 160 receives the objects transmitted from the external device, and the display unit 170 displays the objects received through the object reception unit 160.

For example, when the object display device 100 accesses a specified site through the Internet, the web page of the corresponding site is display through the display unit 170 in a manner that the respective objects included in the corresponding web page are displayed in the specified order. In this case, the request order of the objects is arranged according to the display order of the objects, and if the order in the object information precedes the display order, the request order is arranged accordingly, so as to improve the web page displaying speed.

In addition, even in the case of printing specified objects through a printer, the request order of the object is arranged according to the order of the printed objects, in the same manner as the above-described access of the web site, and if the order in the object information precedes the printing order, the request order is arranged accordingly to improve the printing speed.

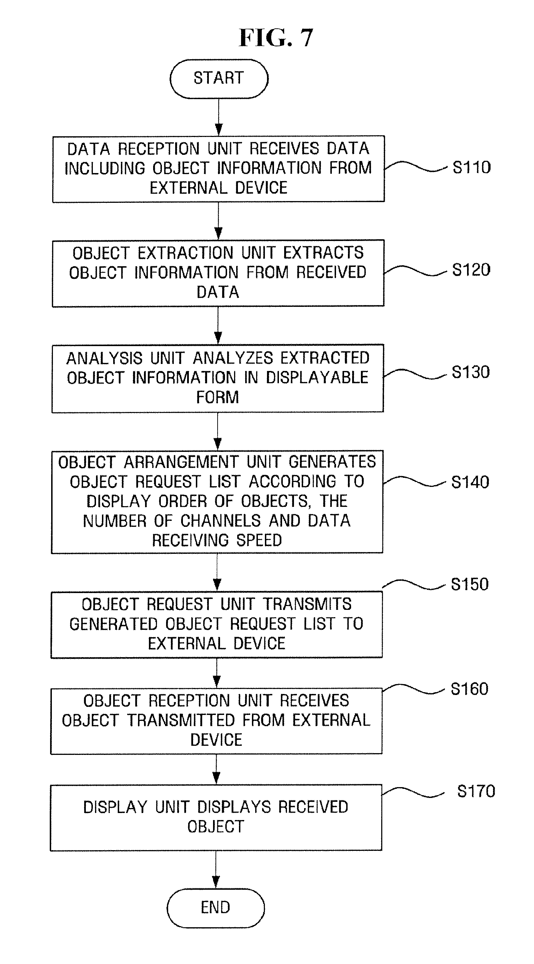

FIG. 7 is a flowchart illustrating a method of displaying objects according to an object request order according to an exemplary embodiment of the present invention.

AS shown in FIG. 7, according to the method of displaying the objects according to the object request order according to an exemplary embodiment of the present invention, the data reception unit 110 first receives data including object information from an external device (S110).

The object extraction unit 120 extracts the object information from the received data (S120). In the exemplary embodiment of the present invention, the object information is exemplified as being composed of a markup language. However, the object information is not limited thereto.

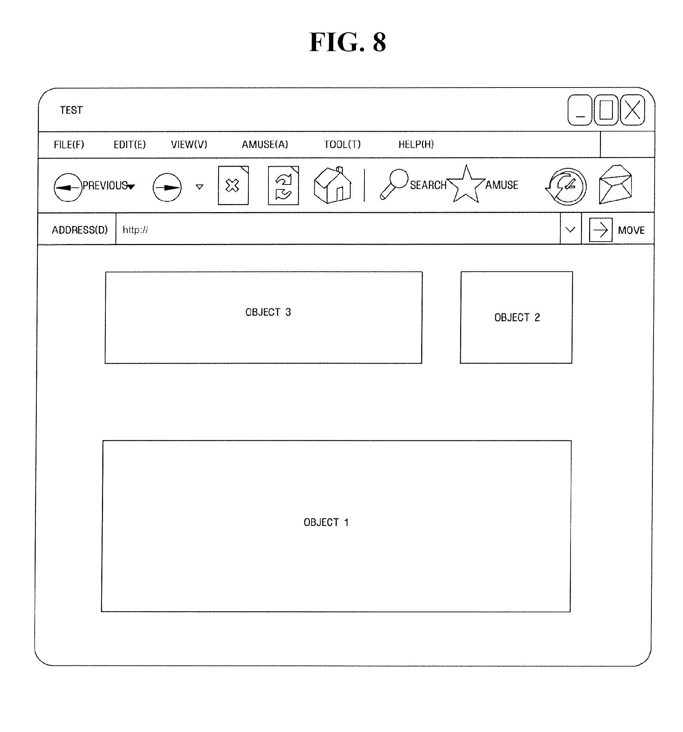

The analysis unit 130 analyzes the extracted object information in a displayable form (S130). In this case, the object information analyzed by the analysis unit 130 is as shown in FIG. 3, and the objects displayed according to the object information are as shown in FIG. 8. In the exemplary embodiment of the present invention, it is exemplified that the objects in the object information are arranged in the order of object 1, object 2, and object 3, but the objects are displayed in the order of object 3, object 2, and object 1.

The object arrangement unit 140 generates the object request list in which the objects included in the object information analyzed by the analysis unit 130 are arranged (S140). In this case, the object request list follows the arrangement order of the objects in the object information, and in the exemplary embodiment of the present invention, the arrangement order of the objects in the object request list is updated according to the display order of the objects, the number of channels and the data receiving speed.

Specifically, the object arrangement unit 140 generates the object request list, in which the objects are arranged in the order of object 1, object 2, and object 3, according to the object information analyzed in operation S130. In addition, if the arrangement order of the objects in the object information analyzed as shown in FIG. 8 is different from the display order of the objects, the object arrangement unit 140 updates the arrangement order of the objects in the object request list according to the display order of the objects, that is, in the order of object 3, object 2, and object 1.

Accordingly, the display of the objects starts from object 3. If object 1 and object 2 are first requested, the display of the objects is delayed until object 3 is received. In order to prevent the display delay of the objects, object 3, which is displayed far in advance of others, is requested first of all.

Thereafter, if object 3 and object 2 are positioned adjacent to each other and the size of object 3 is larger than the size of object 2, the object arrangement unit 140 first requests object 2, which has a smaller size, and thus re-updates the objects in the object request list in the order of object 2, object 3, and object 1. This re-updated object request list is transmitted to the external device.

The object request unit 150 transmits the object request list generated by the object arrangement unit 140 to the external device (S 150).

The external device transmits the objects according to the object request list transmitted from the object request unit 150 (S160).

The objects transmitted from the external device are received through the object reception unit 160, and then displayed on the display unit 170 (S170).

In FIG. 7, the object display apparatus 100 according to an exemplary embodiment of the present invention is exemplified as an apparatus that displays a web page by accessing the corresponding Internet site. However, the object display apparatus 100 is not limited thereto, and may also be an apparatus for printing objects which can reduce the object printing time by performing the printing in a similar manner to the method of FIG. 7.

In the apparatus and method for displaying objects according to an object request order according to an exemplary embodiment of the present invention, the term "unit", as used herein, means, but is not limited to, a software or hardware component, such as a Field Programmable Gate Array (FPGA) or Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units.

As described above, according to the apparatus and method for displaying objects according to an object request order according to the exemplary embodiments of the present invention, the request order of the objects is updated in consideration of the display order of the objects, the number of channels and the data receiving speed, and thus the object displaying speed can be improved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for displaying objects according to an object request order, the apparatus comprising:
a data reception unit (110) that receives data including object information regarding a plurality of objects stored in an external device;
an object arrangement unit (140) that confirms a display order of the plurality of the objects through the object information and that generates an object request list, in which the objects are arranged in a specified order, according to a result of the confirmation;
an object request unit (150) that transmits the object request list to the external device; and
a display unit (170) that displays the objects transmitted from the external device in response to the transmitted object request list.

2. The apparatus of claim 1, wherein the object information is composed of a markup language, and comprises object names, storage path information, and display position information of the objects.

3. The apparatus of claim 1 or 2, further comprising an analysis unit (130) that analyzes the object information, wherein the object arrangement unit generates the object request list according to an arrangement order of the objects in the analyzed object information.

4. The apparatus of claim 3, wherein the object arrangement unit (140) updates the generated object request list according to the display order of the objects in the analyzed object information.

5. The apparatus of any one of claims 1-4, wherein the object arrangement unit (140) updates the object request list so that an object, having a relatively small size among objects displayed in neighboring positions, is first requested according to a number of channels and a data receiving speed.

6. A method of displaying objects according to an object request order, the method comprising:
receiving data including object information regarding a plurality of objects stored in an external devices (S110);
confirming a display order of the plurality of the objects through the object information and generating an object request list, in which the objects are arranged in a specified order, according to a result of the confirmation (S120-S140);
transmitting the object request list to the external device (S150); and
displaying the objects transmitted from the external device in response to the transmitted object request list (S170).

7. The method of claim 6, wherein the object information is composed of a markup language, and comprises object names, storage path information, and display position information of the objects.

8. The method of claim 6 or 7, further comprising analyzing the object information (S130), wherein the generating generates the object request list according to an arrangement order of the objects in the analyzed object information.

9. The method of claim 8, wherein the generating updates the generated object request list according to the display order of the objects in the analyzed object information (S140).

10. The method of claim 9, wherein the generating updates the object request list so that an object, having a relatively small size among objects displayed in neighboring positions, is first requested according to a number of channels and a data receiving speed.
